# EUROPEAN PATENT SPECIFICATION

(11) **EP 3 205 482 B1**
(45) Date of publication and mention of the grant of the patent: **13.01.2021**
(21) Application number: 17156048.5
(22) Date of filing: 14.02.2017
(51) Int. Cl.: B29C 65/48, B29C 44/12, B29C 65/54, B29C 44/02, B29C 65/78, B29C 69/00, B29C 44/18, B29C 65/58, B29C 65/60, B29C 65/72, B29L 31/30, B29K 421/00, B29K 483/00, B29K 427/06, B29K 27/06, B29K 75/00, B29K 83/00, B29K 105/24

(54) **PRODUCT ASSEMBLING METHOD**
PRODUKTMONTAGEVERFAHREN
PROCÉDÉ D'ASSEMBLAGE DE PRODUIT

(30) Priority: 15.02.2016 DE 102016102576
(43) Date of publication of application: 16.08.2017
(73) Proprietor: Gealan Formteile GmbH, 95145 Oberkotzau (DE)
(72) Inventor: SAUNUS, Christian, 08223 Grünbach (DE); PÖHLMANN, Thomas, 95111 Rehau (DE); von der GRÜN, Jörg, 95111 Rehau (DE); GERSTNER, Woldemar, 95030 Hof (DE); MÜLLER, Lutz, 08543 Pöhl (DE); BUHEITEL, Christian, 95111 Rehau (DE)
(74) Representative: Fleuchaus, Michael A.

(56) References cited:
- US-A- 5 063 870
- US-A1- 2014 295 155

## Description

The present invention refers to methods for manufacturing products, in particular plastic products, by assembling plastic elements. More particularly, the invention refers to methods for assembling, e.g. bonding, plastic elements to manufacture products that resist and/or partially absorb vibrations or shocks. For instance, such products may be plastic products to be used cars, e.g. housings, speaker systems, glove boxes, and the like.

Methods for assembling plastic elements are known in the art. In several methods a first and a second plastic element are bonded together to form an assembled plastic product. More specifically, the bonding between said elements is generally achieved by a glue layer, said layer being in contact with a first contact surface of the first element and with a second contact surface of the second element and thereby providing a material fit between said contact surfaces.

The relatively poor elastic properties of many glue layers, however, negatively affect the performances of the assembled plastic product as concerns resistance or even absorption against damage by vibration and/or shock. The relatively limited elasticity of the glue layer exposes said glue layer to cracking by embrittlement and thus weakens the connection between the two elements. Said connection may be weakened or even broken by deformations of the first and/or of the second contact surfaces, since the glue layer is sometimes incapable of deformation to the extent the connected elements are, in particular over extended periods of time and during substantial thermal and or mechanical wear.

Other methods prescribe to apply plastic foam on the first contact surface. Once the plastic foam is set, e.g. has reacted completely and is in a set state, the second contact surface is brought in contact with the foam. The first element, the second element, and possibly the hardened foam are then connected via a screw joint or the like, e.g. by forcing them together by means of screws and/or similar fastening means, so as to generate a positive force fit between the first and second elements as well as the foam. Such methods are inherently complex and costly, i.e. production costs are substantially increased by the additional screwing process and by the presence of the screws.

Lastly, such connections are prone to solid-borne sound by means of the fastening means, i.e. in spite of the relatively good shock and/or vibrations absorptions properties of the hardened foam, the vibration damping properties of the assembled product are negatively affected by the fastening elements, such as screws, transmitting vibrations from one element to the other.

US 2014/0295155 A1 discloses a process for producing a composite component having a first and a second component element which are connected by an adhesive-based connection.

US 5.063.870 A discloses a method for manufacturing a boat hull whereby all components are bonded together by a foam floatation to form an extremely rigid but lightweight structure.

It is thus an object of the present invention to provide a method for manufacturing products, in particular plastic products, which at least partially overcomes the drawbacks of the prior art.

This object is solved by a method according to claim 1. Embodiments of the invention are the subject matter of the dependent claims.

Accordingly, the present invention pertains to a method for manufacturing a product, the product including at least a first and a second element. The first and second elements are made of a first and a second hard plastic component, respectively, and the first and second elements comprise a first and a second supporting surface, respectively,

The first and the second supporting surface are generally complementary to one another: For instance, the shape of the first supporting surface and the shape of the second supporting surface may substantially conform to each other, e.g. the two supporting surfaces may both be substantially flat and/or the shape of the first supporting surface may be substantially the negative of the shape of the second supporting surface.

For example, the first and the second supporting surface may be substantially complementary to one another if the first and the second supporting surface may be put in an almost positive fit with one another, however, with a certain clearance between the two. The first and/or the second supporting surface may, however, also be deviating from a substantially complementary shape, to allow voids to exist and extended clearance areas,

The method according to the present invention further comprises at least the steps of:
a. Applying an expandable polymer material in an unset state to at least the first supporting surface;
b. bringing the expandable polymer material in contact with at least the second supporting surface while the expandable polymer material is in an unset state;
c. putting the first and the second supporting surface in a first predefined position with respect to each other and locking the first and the second supporting surface in the first predefined position;
d. allowing the expandable polymer material to spread at least along the first and/or along the second supporting surface during expansion thereof;
e. allowing the expandable polymer material to set in an expanded state; and
f. by exerting a biasing force, putting the first (110) and the second (210) supporting surface in a second predefined position with respect to each other and locking the first (110)and the second (210) supporting surface in a second predefined position.

An expandable polymer material in the sense of the present invention is henceforth called "material". The material may be thermally expandable, water expandable, and/or expandable via a foaming process induced by e.g. a propellant. When applied to the first supporting surface and/or when brought in contact with the second supporting surface, the material may be in a liquid or in a foam state.

The material is in e.g. in an unset state if it is not yet hardened or fully polymerized/cross-linked and/or if a strong integral skin has not yet formed. According to the present description, the material may be in a foam state when the material is still in an unset state e.g. during the expansion stage, i.e. the stage when the material's volume increases to attain the desired volume.

A material in a foam state can be considered to be in an unset state also during the latent phase. The latent phase is considered the stage starting after the material has been mixed incubated with a propellant and ending when the material's volume starts increasing, i.e. when the material enters the expansion stage.

In particular, the adhesive properties of the material in the unset state allow for bonding the first and the second element together.

The material is set if it is hardened or fully polymerized/cross-linked and/or if a strong integral skin has formed. For example, the material may set in a foam state, e.g. during the stabilisation and/or maturation phase. The stabilisation phase is the phase following the growth stage and is characterised by an increase of the material viscosity and/or by the solidification of the material. In the maturation phase, instead, the solidified material hardens and its strength and elasticity increases.

Polymerization and/or cross-linking progresses during the stabilization and the maturation phase.

The two supporting surfaces may be put and/or locked in the first predefined position by forces acting on the first and/or on the second element. Said forces may be urging forces, i.e. forces urging together the supporting surfaces, and/or repulsive forces, i.e, forces moving the supporting surfaces away from each other. For example, urging forces may be a weight of the first element and/or the second element Repulsive forces may be expansion forces, i.e. forces exerted by the material during its expansion, and/or forces generated by the pressure of the material.

External devices may also contribute to put and/or to lock the two supporting surfaces in the first predefined position. For example, the first and the second element may be held in place by using fixing means, such as clamping devises, which e.g. hold the two elements in a defined position with respect to each other, so as to counteract the expansion forces of the expandable material during the expansion stage.

The locking of two supporting surfaces in the first predefined position may alternatively or additionally be achieved by a positive and/or a non-positive fit between these first and the second element. For example, when the two supporting surfaces are in the first predefined position, the first and the second element may be interlocked with one another e.g. via locking elements, such as a tongue and groove joint, which lock the two elements relative to one another and thus keep the two supporting surfaces in the first predefined position.

The locking of the two elements may also be achieved without an external fixation of the two elements relative to one another, as, for example, in a case where the second element comprises at least a hook. More specifically, the shank of the hook extends along a direction substantially perpendicular to the first supporting surface and is connected thereto, The distal end of the shank constitutes the bend of the hook, the bend facing the first supporting surface.

For example, the first element may be positioned with the first supporting surface pointing upwards and the material applied to the first supporting surface while in an unset state, e.g. during the latent phase of its expansion (step a.). The second element may then positioned between the first supporting surface and the bend of the hook with the second supporting surface pointing downwards and facing the first supporting surface. In this position, the material contacts the second supporting surface (step b.).

The expansion forces of the material may push the second element upwards towards the bend of the hooks until the first and second supporting surfaces are in the first predefined position, that is when a contacting portion of the second element engages the bend. Alternatively, in step b., the second element may already be placed in a position in which a contacting portion of the second element engages the bend.

The contact force between the hook and the second element counteracts the expansion force and thus the first and the second supporting plane are locked in the first predefined position (step c.).

The locking of the first and of the second element in the first predefined position limits the degrees of freedom along which the material may expand during its expansion, In particular, the material cannot expand further along a transverse directions, thus leading to a spreading of the material at least partially along the first and/or along the second supporting surface during expansion thereof given its continuous increase in volume during the expansion phase (step d.).

The first and/or the second element may comprise venting elements, which are arranged in proximity of the first and/or of the second supporting surface and which may improve and/or streamline the expansion of the material.

It is worth noting that the alphabetical order, according to which the steps of the method are disclosed, may or may not correspond to the chronological order, according to which these steps are performed,

Once the material has set in step e., the elastic properties of the expanded material enable the product to effectively absorb vibrations and/or shocks and improve the quality and the strength of the bond between the first and the second element, Furthermore, the bonding between the two elements may be performed without using fastening means such as screws, nails and the like. This way, the shock and/or the vibrations absorptions properties of the product are increased while the production costs are contained.

In an embodiment of the method according to the present invention, the first and the second supporting surfaces may be put in the first predefined position with respect to one another by means of the expansion force being exerted by the material during its expansion. In particular, the supporting surfaces may be put in the first predefined position by allowing the second element to raise with the help of the expansion force, and thus without compressing the material. The absence of compression forces acting on the material while in an unset state substantially reduces the creep tendency of the material in a set state.

In another embodiment of the method according to the present invention, the step of putting and locking the first and the second supporting surface (i.e. the first and second element) in the first predefined position, i.e. step c., is at least partially performed by using fixation clamping means, such as, for example, clamping means. For example, clamping means may comprise clamping plates, clamping straps, pincers, clamps, rubber bands, and the like. For instance, the first and the second element may be kept in the first predefined position by using said clamping means, which e.g. releasably engage the two elements so as to counteract the expansion forces of the expandable material.

The use of clamping means allows for the easy production of relatively small and/or light products, e.g. products, which are not heavy enough to counteract the expanding forces of the material by means of their weight. Contrary to the fastening means (e.g. rivets, screws, nails, and the like) clamping means may be easily disengaged from the product and thus do not influence its vibrations and shock absorption properties. This way, solid-borne sound transmission may be effectively avoided.

In yet a further embodiment of the method according to the present invention, the step of putting and locking the first and the second supporting surface in the first predefined position, i.e. step c., may be at least partially performed by the weight of the first and/or the second element. The production process is thus simplified and streamlined, since step c. my be performed substantially without the need of any external operation and/or device.

In another exemplary embodiment, the first element is positioned on a horizontal support, with the first supporting surface pointing upwards. The material is then applied to the first supporting surface while in an unset state (step a.). The second element is moved towards the first element with the second supporting surface facing the first one, and when the two supporting surfaces are at an appropriate distance with respect to each other, the second supporting surface gets in contact with the material (step b.) and is left to lie thereon.

In this embodiment, step c. is performed by an interplay between the expansion of the material, which urges the second element upwards, and the weight of the second element, which urges said element downwards. In particular, the second element is at first pushed downwards by its own weight until the first and second supporting surface are in first predefined position, that is the position in which the vertically acting expansion of the material substantially counteracts the weight of the second element. The first and the second supporting surface are thus locked in the first predefined position, since the expansion of the material and the weight of the second element cancel out each other.

Step c., may also be performed, at least in part, by using fastening means such as screws, bolts, rivets, nails, locking elements and/or the like. In particular, the fastening means engage the first and/or the second element and define a positive and/or a non-positive connection therewith.

In another embodiment of the present invention, during the step of allowing the expandable polymer material to spread along the first and/or second supporting surface, i.e, during step d., the expandable polymer material is allowed to spread along further surfaces of the first and/or second element, wherein the further surfaces are adjacent to the first and/or the second supporting surface.

For example, the spreading of the material along further surfaces may be achieved by increasing the amount of the material applied to the first supporting surface and/or put in contact with the second supporting surface, i.e. the amount of material involved in the bonding between the first and the second element. Alternatively or in conjunction with the above, such spread may be achieved by e.g. increasing the level of the urging forces.

The amount of the material involved in the bonding and/or the level of the urging forces may be defined so as to prevent the first and the second element to get into a direct contact with each other,

The spreading of the material along the further surfaces increases the contact surface between the first element and the material and/or between the second element and the material. This way, the strength of the adhesive bond between the first and the second element and/or the shock absorption properties of the product are improved.

In an embodiment, the first and/or the second element comprise a first and/or a second locking element, respectively. When the first and the second supporting surfaces are in the first predefined position, the first and/or the second locking element engages with a respective engagement portion of the second and/or of the first element, respectively, thereby locking the first and the second supporting surface in the first predefined position. If the first and the second element comprise the first and the second locking element, respectively, the engagement portion of the first element may be the first locking element and/or the engagement portion of the second element may be the second locking element.

For example, the first locking element may be identified with the bend of the hook of the first element and the engagement portion of the second element with the contact portion of the second element, i.e. with the portion, which engages with the bend when the two supporting surfaces are in the first predefined position. In particular, when the first and the second supporting surfaces are in the first predefined position, the first and the second locking element may engage and/or interlock with each other and thus e.g. define a positive and/or a non-positive connection between the first and the second element.

In an embodiment, the first and second elements may be urged in a first predefined position in such way that, when the two supporting surfaces are in the first predefined position, first and second locking elements do not engage directly with their respective engagement partners but are separated by a clearance from each other so as to allow the material to spread into the clearance. The material thus fills the clearance and, when set, acts as a further vibration and/or shock absorber between the first and second elements as well as the locking elements. This helps to further minimize solid-borne sound transmission.

In an embodiment, the material may e.g. also be allowed to spread along the first and/or the second locking element so as to use the expanding force to urge the first and the second locking element together thereby securing the engagement between said locking elements,

For example, the first element may comprise a wall arranged in proximity of the shank of the hook thereby defining a volume therebetween. When the material is allowed to expand, it may spread into and fill the volume defined by the hook and the wall and thus, upon further expansion and setting, pushes the shank or the bend towards the second element securing the hook in its engaged position with the engagement portion of the second element.

In this case, for example, the chronological order of the steps may not coincide with their alphabetical order. For example, the two supporting surfaces may be put and locked in the first predefined position by interlocking the first and the second locking element with each other (step c.) and defining a clearance between the first and the second supporting surface, without the material having been applied to the first support surface,

Only afterwards, the material may be injected into the clearance between the two supporting surfaces while the material is in an unset state, such as, by means of an injection nozzle. During the injection, the material is applied on the first supporting plane (step a.) and is brought in contact with the second supporting plane (step b.). Depending on the mutual position of the two supporting surfaces, and on the position of the nozzles with respect to the supporting surfaces, step a. may be antecedent, precedent, or substantially simultaneous to step b.

Specifically, the first and second locking element may constitute a first locking pair and the first locking pair may comprise a hook and a portion of the second element, a hook and a portion of the first element, a protrusion and a notch, a tongue and a groove, a pin and a hole, or a rivet and a generally tubular passage.

Suitably, step f. is performed after step e., i.e. after the step of allowing the expandable polymer material to set in an expanded state.

The biasing force may for instance be a compressing force urging the first and the second supporting surface together and thereby compressing the expanded material. The compression may, for example, alleviate the negative effects of a time-induced shrinking and/or relaxation of the expanded material, effects which may *inter alia* lead to a loss of the vibration or shock absorbing characteristics of the foam based bond (i.e. the bond by way of the expanded material) between the first and the second elements, which may further lead to a loosening of the bond between the first and/or or the second elements.

In particular, also, compressing the expanded material when locking the second element in the second predefined position, puts the system into a spring loaded state given the elastic spring-type characteristics of the expanded material similar to a polymer cushion, or the like,

In a further embodiment of the present invention the first and/or the second element comprise a third and/or a fourth locking element, respectively. When the first and the second supporting surface are in the second predefined position, the third and/or the fourth locking elements engage with engagement portions of the second and/or first element, respectively, thereby locking the first and the second supporting surface in the second predefined position. In particular, the engagement portion of the first element may be the third locking element and/or the engagement portion of the second element may be the fourth locking element.

The third and the fourth locking elements may constitute a second locking pair, and the second locking pair may comprise a hook and a portion of the second element, a hook and a portion of the first element, a protrusion and a notch, a tongue and a groove, a pin and a hole, or a generally tubular passage and a rivet.

In an embodiment of the method according to the present invention, the first and/or the second locking elements are the third and/or the fourth locking elements, respectively, This way, step c. and step f. may be performed without increasing the complexity of the shape and/or of the structure of the first and/or of the second elements.

According to a further embodiment of the invention, the first element comprises a recess with a bottom surface, wherein the bottom surface comprises the first supporting surface. In this embodiment, the method further comprises the step of:
g. Inserting at least a first portion of the second element inside the recess, wherein the first portion comprises at least the second supporting surface.

The presence of a recess may simplify the assembly of the first and of the second element by helping the correct positioning of these two elements during assembly. Specifically, also, the recess may replace one or another locking pair in the form or hooks or the like and thus lead to a simplified construction of the elements. This may, for example, also prevent, at least in part, misplacements of the first and second element with respect to each other.

In another embodiment of the method according to the present invention, the recess comprises a lateral surface and the method further comprises the step of:
h. Allowing the expandable polymer material to spread along at least a portion of the lateral surface of the recess while the expandable polymer material is in an unset state.

The spread of the material along the lateral surface may be achieved by e.g. increasing the amount of material involved in the bonding between the first and the second element. Alternatively or in conjunction with the above, such spread may be achieved by e.g. increasing the level of the urging forces. The spread of the material along the lateral surface may increase the contact surface between the first element and the material and/or between the second element and the material.

In particular, also, a clearance between the lateral surface and the second element may be defined when the second element is in the first predefined position and the expandable material allowed to spread into this recess during expansion thereof. This way, as in the case where the expandable material spreads into the clearance between the locking elements and their respective engagement portions, even when the expansion has stopped and the expandable material set, no direct contact between the second element and the lateral surface happens (similarly to the case where no contact happens between the locking elements and the engagement portions), but contact is only via the set expandable material.

This way, solid-borne sound transmission is largely reduced given there is no direct contact between the first and second elements preferably made of a hard plastic but contact is via a layer of expanded material having the thickness of the clearance, and thus having a certain elasticity and thus vibration and shock absorbing characteristics. Also, this way the strength of the adhesive bond and/or the shock absorption properties of the product may be improved.

According to an embodiment of the present invention, the first and/or the second supporting surfaces comprise corrugations, preferably complementary in shape. The corrugations increase the area of the contact surface between the first element and the material and/or the area of the second element and the material, thereby increasing the strength of the adhesive bond between these two elements.

In another embodiment of the present invention, the first and the second locking element are a pin and a generally tubular passage, respectively, or the second and the first locking element are a pin and a generally tubular passage, respectively. When the first and the second supporting surface are in the first predefined position, the pin is inserted through the generally tubular passage. Preferably, the pin is made of a plastic component.

In this embodiment, the method further comprises the step of:
i. Performing a hot riveting process and/or a hot staking process on the pin thereby defining a positive interlock between the first and the second element.

This positive interlock allows for locking the supporting surface in the first predefined position.

In another embodiment of the invention, the first hard plastic component may in particular be a relatively rigid material comprising polymers such as polyurethane, polyethylene, polypropylene, polyvinyl chloride, nylon, acrylonitrile, acrylnitril-butadien-styrole-copolymere and/orcombination thereof. The expandable plastic material may in particular be a relatively elastic material comprising elastomers such as silicone, polyurethane, polyethylene, polyvinyl chloride, ethylenevinyl acetate, rubber, and/or combinations thereof.

Exemplary embodiments of the invention are described in the following with respect to the attached figures. The figures and corresponding detailed description serve merely to provide a better understanding of the invention and do not constitute a limitation whatsoever of the scope of the invention as defined in the claims. In particular:
- **Fig. 1a**: is a cross sectional schematic view of the first element during the performance of a first embodiment of the method according to the present invention;
- **Fig. 1b**: is a first cross sectional schematic view of the first and of the second element during the performance of the first embodiment of the method;
- **Fig. 1c**: is a second cross sectional schematic view of the first and second element during the performance of the first embodiment of the method;
- **Fig. 1d**: is a third cross sectional schematic view of the first and second element during the performance of the first embodiment of the method;
- **Fig. 2a**: is a cross sectional schematic view of the first element during the performance of a second embodiment of the method according to the present invention;
- **Fig. 2b**: is a first cross sectional schematic view of the first and of the second element during the performance of the second embodiment of the method;
- **Fig. 2c**: is a second cross sectional schematic view of the first and second element during the performance of the second embodiment of the method;
- **Fig. 2d**: is a third cross sectional schematic view of the first and second element during the performance of the second embodiment of the method;
- **Fig. 3a**: is a cross sectional schematic view of the first element during the performance of a third embodiment of the method according to the present invention;
- **Fig. 3b**: is a first cross sectional schematic view of the first and of the second element during the performance of the third embodiment of the method;
- **Fig. 3c**: is a second cross sectional schematic view of the first and second element during the performance of the third embodiment of the method;
- **Fig. 3d**: is a third cross sectional schematic view of the first and second element during the performance of the third embodiment of the method;
- **Fig. 3e**: is a fourth cross sectional schematic view of the first and second element during the performance of the third embodiment of the method;
- **Fig. 4a**: is a cross sectional schematic view of the first element during the performance of a fourth embodiment of the method according to the present invention;
- **Fig. 4b**: is a first cross sectional schematic view of the first and of the second element during the performance of the fourth embodiment of the method;
- **Fig. 4c**: is a second cross sectional schematic view of the first and second element during the performance of the fourth embodiment of the method;
- **Fig. 4d**: is a third cross sectional schematic view of the first and second element during the performance of the fourth embodiment of the method;
- **Fig. 4e**: is a fourth cross sectional schematic view of the first and second element during the performance of the fourth embodiment of the method;
- **Fig. 5a**: is a first cross sectional schematic view of the first and of the second element during the performance of a fifth embodiment of the method according to the present invention;
- **Fig. 5b**: is a second cross sectional schematic view of the first and second element during the performance of the fifth embodiment of the method;
- **Fig. 5c**: is a third cross sectional schematic view of the first and second element during the performance of the fifth embodiment of the method;
- **Fig. 5d**: is a fourth cross sectional schematic view of the first and second element during the performance of the fifth embodiment of the method;
- **Fig. 6a**: is a first cross sectional schematic view of the first and of the second element during the performance of a sixth embodiment of the method according to the present invention;
- **Fig. 6b**: is a second cross sectional schematic view of the first and second element during the performance of the sixth embodiment of the method;
- **Fig. 6c**: is a third cross sectional schematic view of the first and second element during the performance of the sixth embodiment of the method;
- **Fig. 6d**: is a fourth cross sectional schematic view of the first and second element during the performance of the sixth embodiment of the method;
- **Fig. 7a**: is a cross sectional schematic view of the first element during the performance of a seventh embodiment of the method according to the present invention;
- **Fig. 7b**: is a first cross sectional schematic view of the first and second element during the performance of the seventh embodiment of the method;
- **Fig. 7c**: is a second cross sectional schematic view of the first and second element during the performance of the seventh embodiment of the method;
- **Fig. 7d**: is a third cross sectional schematic view of the first and second element during the performance of the seventh embodiment of the method; and
- **Fig. 8**: is a cross sectional schematic view of the first and second element during the performance of the eighth embodiment of the method;
- **Fig. 9a**: is a first cross sectional schematic view of the first and second element during the performance of a ninth embodiment of the method;
- **Fig. 9b**: is a second cross sectional schematic view of the first and second element during the performance of the ninth embodiment of the method.

In the figures, like reference numerals denote like elements or, where appropriate, elements with similarfunctionality with respect to the method of the invention. Various features of the below embodiments may, without limitation, be combined to form, within the scope defined by the claims, embodiments not expressly disclosed herein but still understood by the skilled person as being disclosed by the present description.

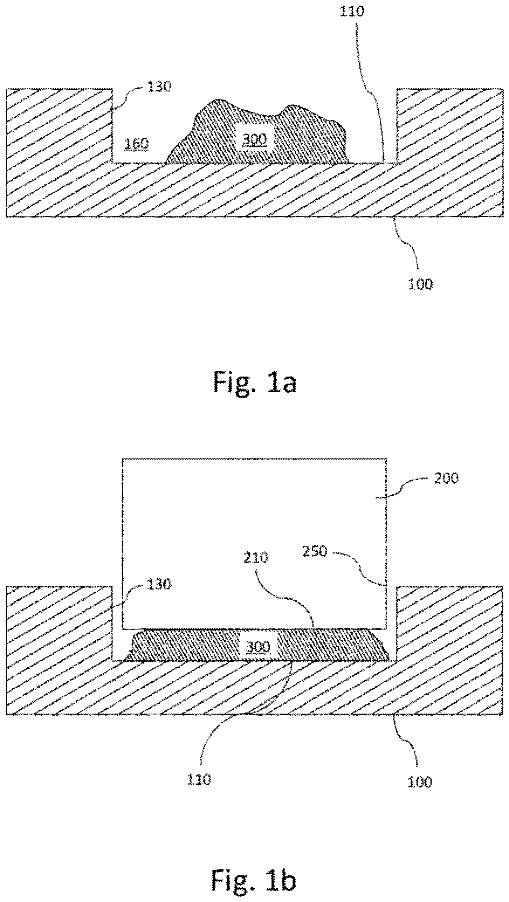

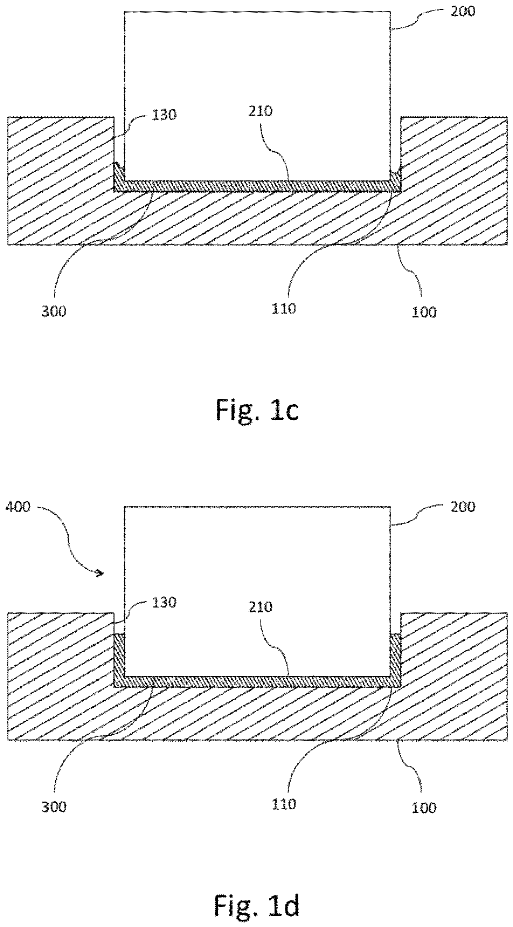

**Figs. 1a** to **1d** show several cross sectional schematic views of the first element 100, of the second element 200, and/or of the product 400 during the performance of a first embodiment of the method according to the present invention.

The first element 100 comprises the recess 160, the recess having a bottom surface and a lateral surface 130, see e.g. **Fig. 1a****.** The bottom surface is substantially flat and corresponds to the first supporting surface 110, while the lateral surface 130 is substantially perpendicular to the first supporting surface 110. As best shown in **Fig. 1b****,** the second element 200 comprises the second supporting surface 210 and a lateral surface 250, the lateral surface 250 adjacent to the second supporting surface 210.

The first embodiment of the method comprises the step of applying the expandable polymer material 300 in an unset state to the first supporting surface 100 (see **Fig. 1a**). The material may for instance be a foam in the latent phase. Afterwards, the first portion of the second element 200 is inserted inside the recess and is put in contact with the material 300 while the material 300 is in a unset state (cf. **Fig. 1b**). The first portion comprises at least the second supporting surface 210, which faces the first supporting surface 100 and is substantially parallel thereto.

The two supporting surfaces 110, 210 are then put in the first predefined position by the weight of the second element (see **Fig. 1c**). More particularly, the second element 200 is pushed towards the first supporting surface by its own weight and eventually spreads the material 300 along the two support surfaces 300 by way of displacement. The second elements stop when the expansion of the material 300 substantially counteracts the weight of the second element 200, e.g. when the material 300 reaches the growth stage. When this happens, the two supporting surfaces 110, 210 are in the first predefined position and are locked therein since the expansion of the material 300 and the weight of the second element 200 cancel out.

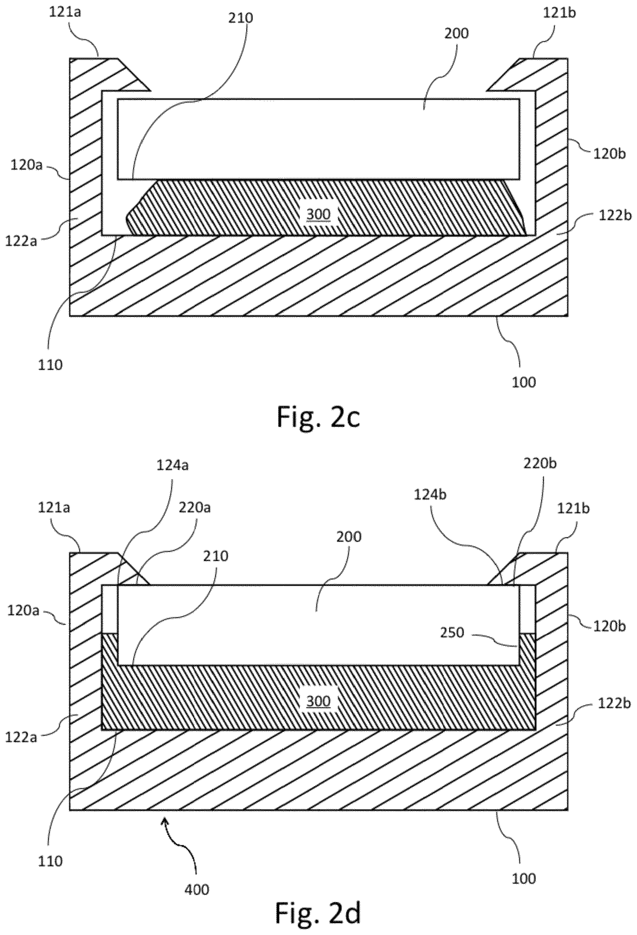

The material 300 is then allowed to expand further along the two supporting surfaces 110, 210, along the lateral surface 130 of the recess 160, and along the lateral surface 250 of the second element 200. After the expansion, the material sets in an expanded state (see **Fig. 2d**).

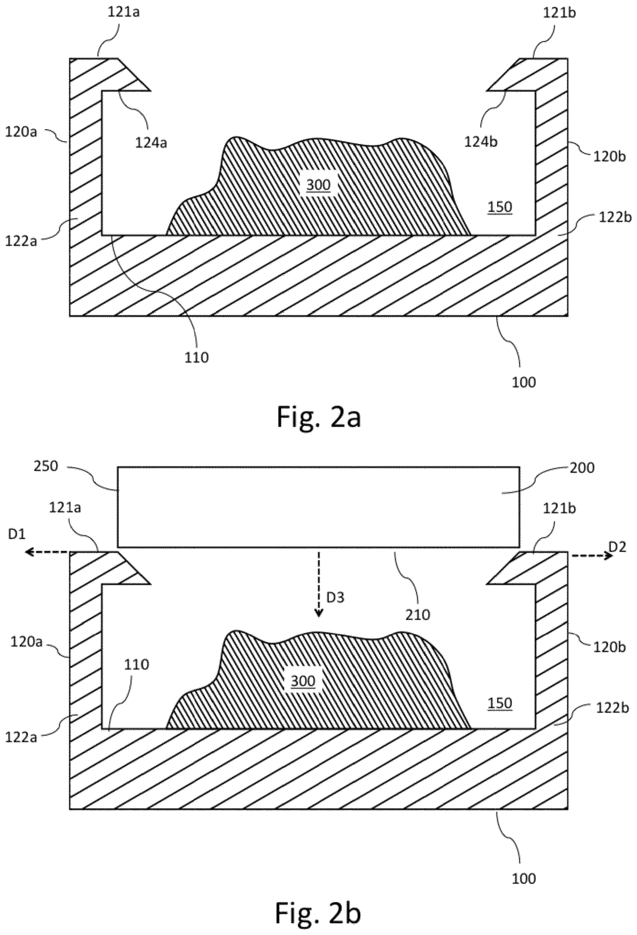

**Figs. 2a** to **2d** show several cross sectional schematic views of the first element 100, of the second element 200, and/or of the product 400 during the performance of a second embodiment of the method according to the present invention. The second element 200 of this embodiment exhibits the previously described properties of the corresponding element of the first embodiment (see e.g. **Fig. 2b****).**

As best shown in **Fig. 2a****,** the first element 100 comprises the first supporting surface 110, a first 120a and a second 120b arm, each of said arms having a base 122a, 122b and a distal end 121a, 121b. The first supporting surface 110 is substantially flat and substantially perpendicular to the two arms 120a, 120b.

The bases 122a, 122b of the arms 120a, 120b are arranged in proximity of the first supporting surface 110, while the distal end of the first arm 120a and the distal end of the second arm 120b constitute a first 121a and a second 121b protrusion, respectively, said protrusions being substantially parallel to the first supporting surface 110. The first 121a and the second 121b protrusion comprise a first 124a and a second 124b engaging surface, respectively, said engaging surfaces facing the first supporting surface 110.

The first supporting surface, the two engaging surfaces 124a, 124b, and the two arms 120a, 120b delimit an interior volume 150. Moreover, the first and the second arm are resiliently movable along a first D1 and a second D2 direction, respectively (cf. **Fig. 2b**). The first and the second direction are substantially opposite to each other, i.e. the first 120a and the second 120b arm may be resiliently moved away from each other.

The first embodiment comprises the step of applying the expandable polymer material 300 in an unset state to the first supporting surface 100, as shown in **Fig. 2a****.** Afterwards, the second element 200 is inserted inside the interior volume 150 to be put in contact with the material 300 while in an unset state (cf. **Fig. 2c**). In particular, the second element 200 is positioned in so that the two supporting surfaces 110, 210 face one another. The second element 200 may either be left to lie on the material 300 or pushed further towards the first supporting surface 110 by an external force.

As best shown in **Fig. 2b** the insertion of the second element 200 inside the interior volume 150 is achieved by moving said element 200 along a third direction D3 towards the interior volume 150. During said movement the second element contact the first 121a and the second 121b protrusion and moves them away from each other along the first D1 and the second D2 direction, respectively, thereby gaining access to the interior volume 150 (see **Fig. 2b**) and being put in contact with the material 300.

The material 300 is then allowed to spread along the two supporting surfaces 110, 120 and to push the second element 200 towards the two engaging surfaces 124a, 124b, until the two supporting surfaces 110, 210 reach the first predefined position shown in **Fig. 2d****.** In correspondence to the first predefined position, the first 124a and the second 124b engaging surfaces contact a third 220a and a fourth 220b engaging surface of the second element, respectively. The contact interaction between the four engaging surfaces 124a, 124b, 220a, 220b counteracts the expansion force of the material 300 thereby locking the two supporting surfaces 110, 210 in the first predefined position. In particular, in this embodiment the first 124a and the second 124b engaging surface constitute first locking elements, while the third 220a and the fourth 220b engaging surface constitute second locking elements.

Once the two supporting surfaces 110, 210 are kept in the first predefined position, the material is allowed to expand along the supporting surfaces 110, along the abutting surfaces of the first element 100 (i.e. along the arms 120a, 120b), and along the abutting surfaces of the second element 200 (i.e. the lateral surface 250). After the expansion, the material sets in an expanded state **(****Fig. 2d****).**

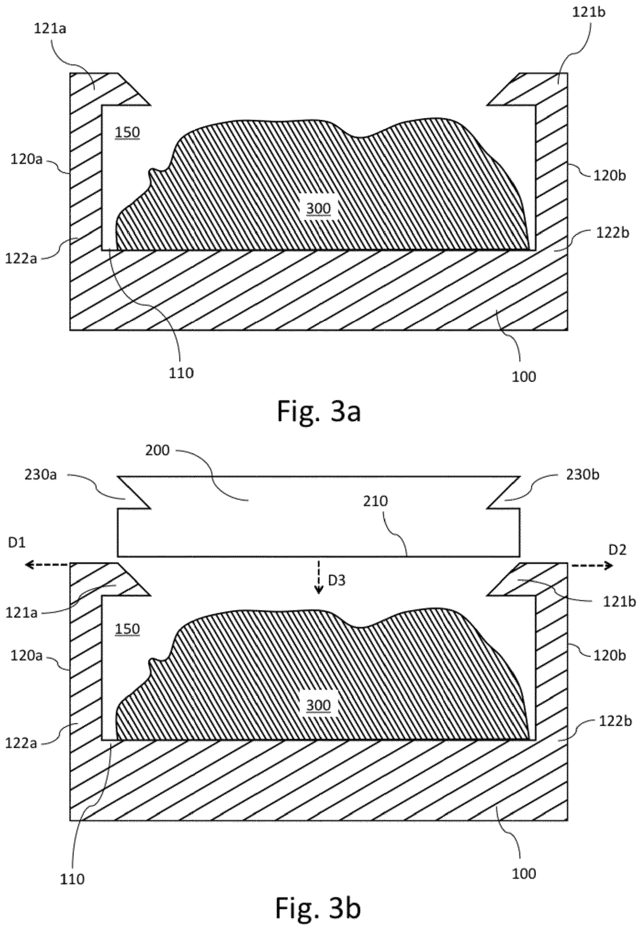

**Figs. 3a** to **3d** show several cross sectional schematic views of the first element 100, of the second element 200, and/or of the product 400 during the performance of a third embodiment of the method according to the present invention.

In this embodiment, the first element 100 is substantially identical to the first element of the second embodiment. The second element 200 exhibits the above-described features of the corresponding element of the second embodiment and further comprises a first 230a and a second 230b groove, said grooves being substantially parallel to each other and to the second supporting surface 200.

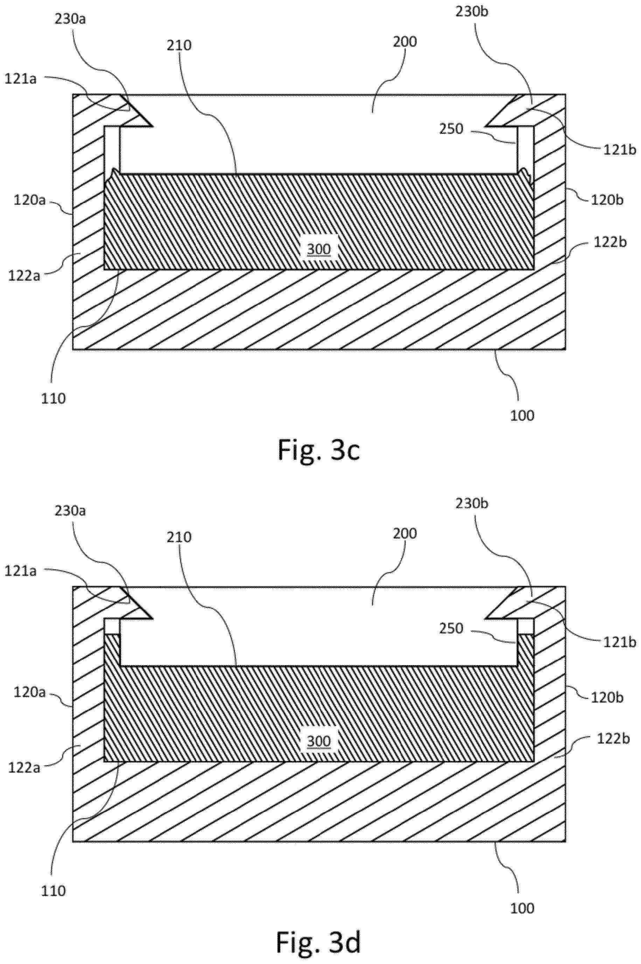

After the step of applying the material 300 in an unset state to the first supporting surface 100, **(****Fig. 3a****),** the two supporting surfaces 110, 210 are put in the first predefined position depicted in **Fig. 3c****.** In particular, this may be achieved by moving the second element 200 along the third direction D3 towards the interior volume 150, see e.g. **Fig. 3b****.**

As depicted in **Fig. 3c****,** in correspondence to first predefined position the first 121a and the second 121b protrusion come into contact and engage the first 230a and the second 230b grove, respectively, thereby defining a double tongue-groove connection between the first 100 and the second 200 element. The first 100 and the second 200 supporting surface are thus locked in the first predefined position. According to the third embodiment of the method, the first 121a and the second 121b protrusion constitute first locking elements, and the first 230a and the second 230b groove constitute second locking elements.

The step of allowing the material to spread along the two supporting surfaces during its expansion and the step of allowing the material 300 to set in an expanded state are performed as the corresponding steps of the second embodiment are performed, see **Fig. 3d****.**

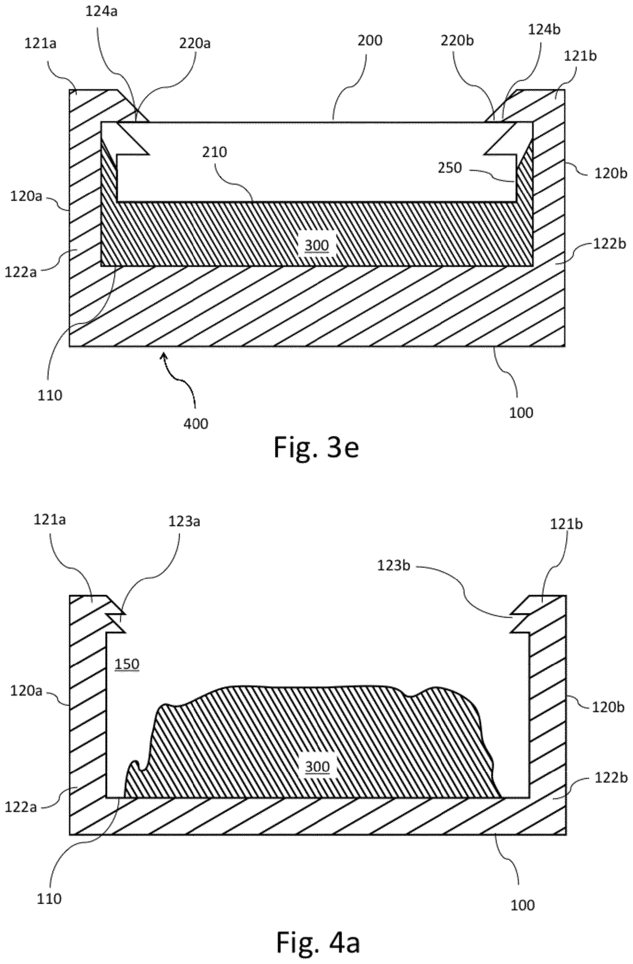

Afterwards the two supporting surfaces 110, 210 are put in the second predefined position shown in **Fig. 3e****.** In particular, a compressing force is exerted to urge the first 100 and the second 200 supporting surface together thereby compressing the expanded material 300.

In correspondence to the second predefined position, the first 124a and the second 124b engaging surfaces contact a third 220a and a fourth 220b engaging surface of the second element, respectively, thereby locking the two supporting surfaces 110, 210 in the second predefined position. The first and the second engaging surface constitute third locking elements, while the third and the fourth engaging surface constitute fourth locking elements.

Several cross sectional schematic views of the first element 100, of the second element 200, and/or of the product 400 during the performance of a fourth embodiment of the method are shown in **Figs. 4a** to **4d****.**

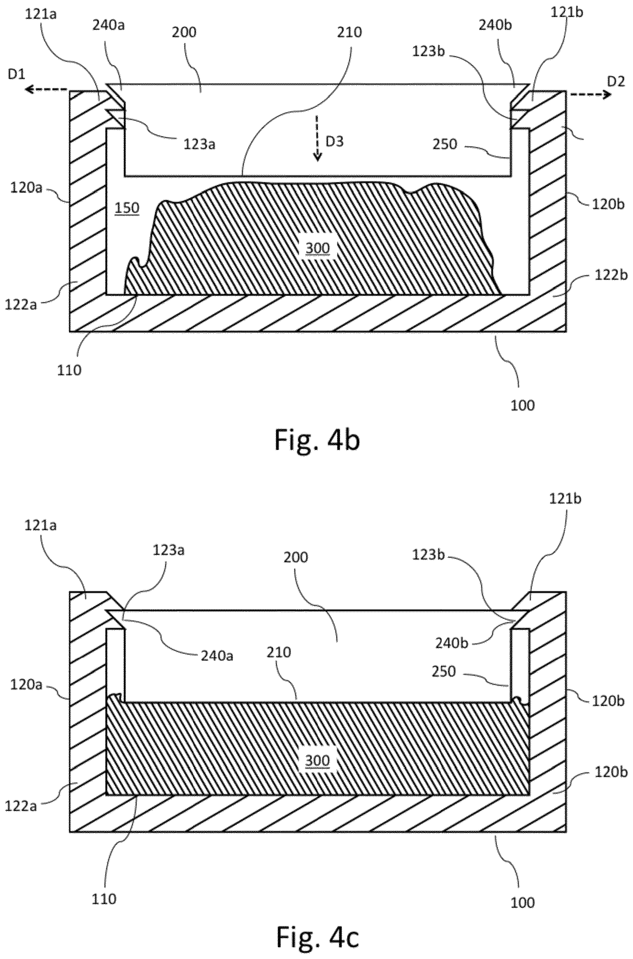

The first element 100 differs from the corresponding element of the third embodiment by the structural features of the first 121a and of the second 121b protrusion. As shown in **Fig. 4a****,** the first 121a and the second protrusion 121b comprise a third 123a and a fourth 123b groove, respectively, these grooves being substantially parallel to each other and to the first supporting surface 110. The second element 200 comprises a third 240a and a fourth 240b protrusion, said protrusions extending substantially parallel to the second supporting surface 210 (see e.g. **Fig. 4b**).

The fourth embodiment of the method comprises the above-described steps of the third embodiment of the invention, and the steps of these two embodiments are performed in the same chronological order. Said embodiments differ from each other by the mechanisms allowing for locking the two supporting surfaces 110, 210 in the first and in the second predefined position.

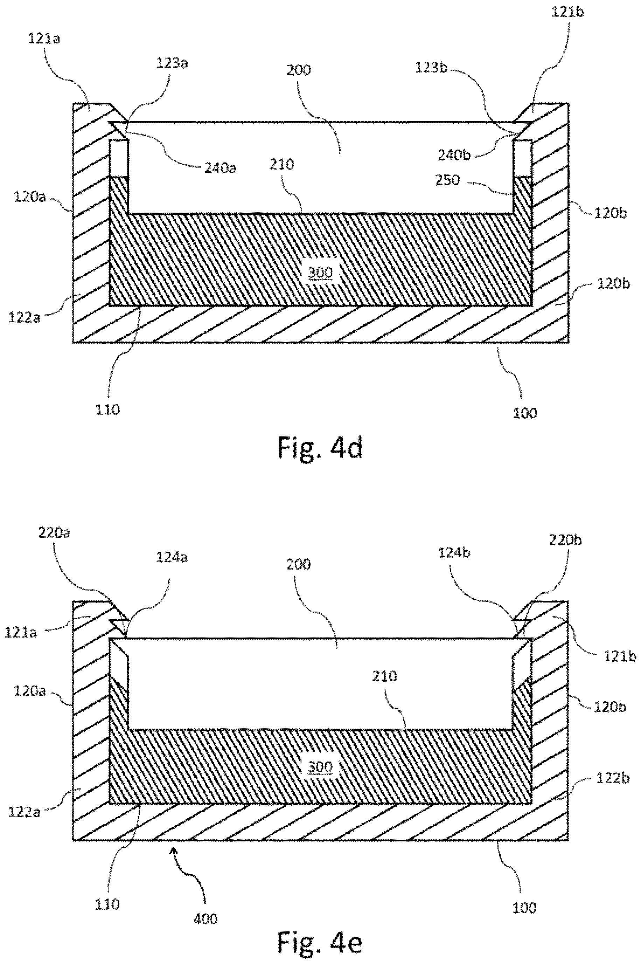

According to the fourth embodiment, when the two supporting surfaces 110, 210 are in the first predefined position, the third 240a and the fourth 240b protrusion come into contact and engage the third 123a and the fourth 123b grove, respectively, thereby defining a double tongue-groove connection between the first 100 and the second 200 elements (see e.g. **Fig. 4c** or **Fig. 4d**).

As shown in **Fig. 4e****,** when the two supporting surfaces 110, 210 are in the second predefined position, the first 124a and the second 124b engaging surfaces contact a third 220a and a fourth 220b engaging surface of the second element, respectively.

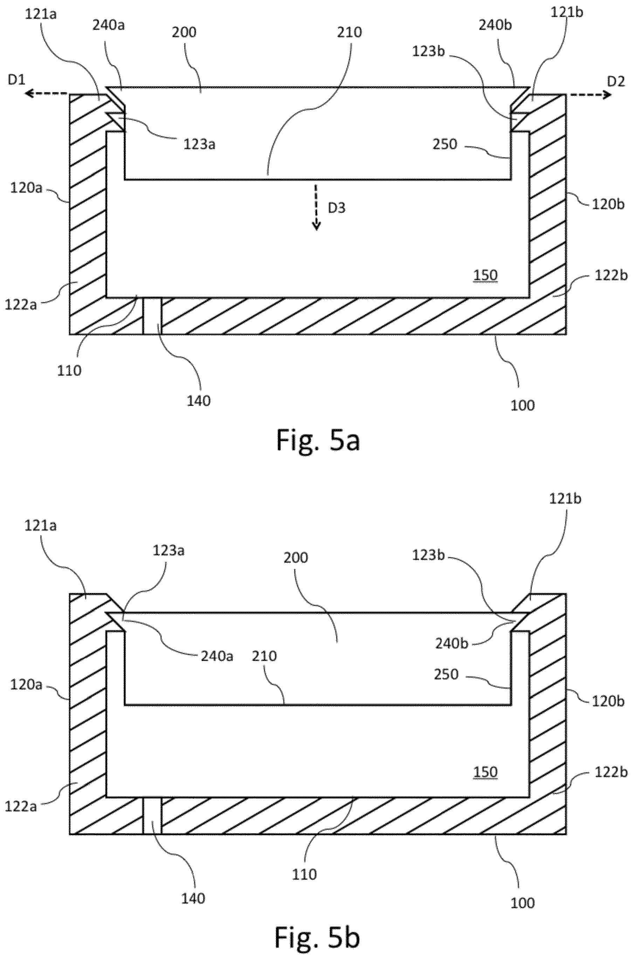

**Figs. 5a** to **5d** show several cross sectional schematic views of the first element 100, of the second element 200, and/or of the product 400 during the performance of a fifth embodiment of the method according to the present invention. In this embodiment, the second element 200 is substantially identical to the second element of the fourth embodiment.

The first element 100 of the fifth embodiment exhibits the above-described features of the corresponding element of the fourth embodiment and further comprises an inlet 140 for injecting the material 300 inside the interior volume 150. The inlet 140 may, for instance, be arranged in proximity of the first support surface 110, see e.g. **Fig. 5a**.

As shown in **Fig. 5a****,** the two supporting surfaces 110, 210 are put in the first predefined position by moving the second element along the direction D3 towards the interior volume 150. When the two supporting surfaces 110, 210 are in the first predefined position, they face each other, while the third 240a and the fourth 240b protrusion come into contact and engage the third 123a and the fourth 123b grove, respectively (see **Fig. 5b**). Therefore, said grooves 123a, 123b and said protrusions 240a, 240b define a double tongue-groove connection between the first 100 and the second 200 elements thereby locking the two supporting surfaces 110, 210 in the first predefined position.

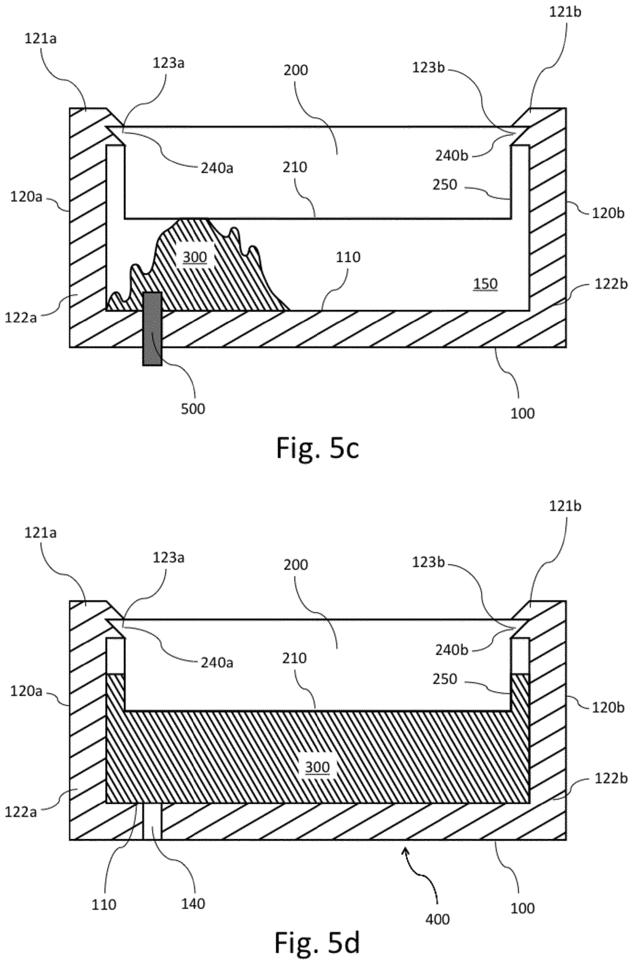

Afterwards, a nozzle 500 is introduced inside the inlet 140 and the material 300 in an unset state is injected inside the interior volume 150, cf. **Fig. 5c**. This way, the material 300 in an unset state is applied to the first supporting surface 110 and is put into contact with the second supporting surface 210, see **Fig. 5c**. During its expansion, the material 330 in an unset state is allowed to spread along the first 110 and the second 210 supporting surface. As shown in **Fig. 5d****,** the material 300 is then allowed to set in an expanded state.

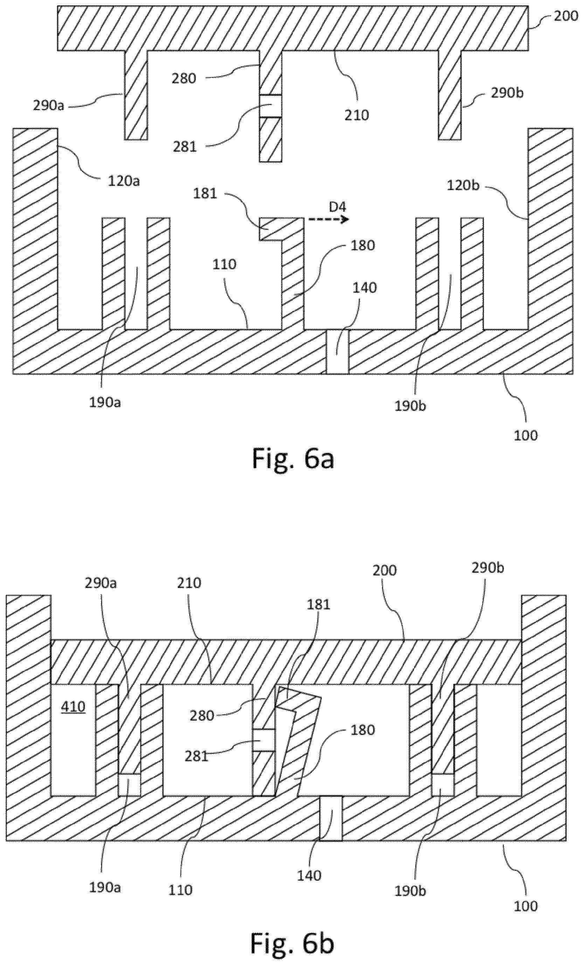

Several cross sectional schematic views of the first element 100, of the second element 200, and/or of the product 400 during the performance of a sixth embodiment of the method according to the present invention are shown in **Figs. 6a** to **6d**

As shown in **Fig. 6a****,** the first element 100 comprises a first 190a and a second 190b u-shaped guide and a first locking pin 180, the guides and the locking pin 180 extending along a direction substantially perpendicular to the first supporting surface 110 and connected thereto. The distal end of the locking pin 180 constitutes a locking protrusion 181, which is substantially parallel to the first supporting face 110. The locking pin 180 is resiliently movable along a fourth direction D4, the fourth direction D4 being substantially parallel to the first supporting surface 110. Further, the first element 100 comprises an inlet 140 for injecting the material 300.

The second element 200 comprises a first positioning pin 290a, a second positioning pin 290b, and a second locking pin 280, wherein said pins are substantially parallel to each other and substantially perpendicularto the second support surface 200. The second locking pin 280 comprises a locking hole 281, through which the locking protrusion 181 may be inserted.

As shown in **Fig. 6b****,** the first and the second element are put in contact with each other thereby defining an internal space 410. More specifically, the first 290a and the second 290b positioning pin are inserted inside the first 190a and the second 190b U-shaped guide, respectively. During this step, the second locking pin 280 interacts with the first locking pin 180 and forces it to move along the fourth direction in a biased position.

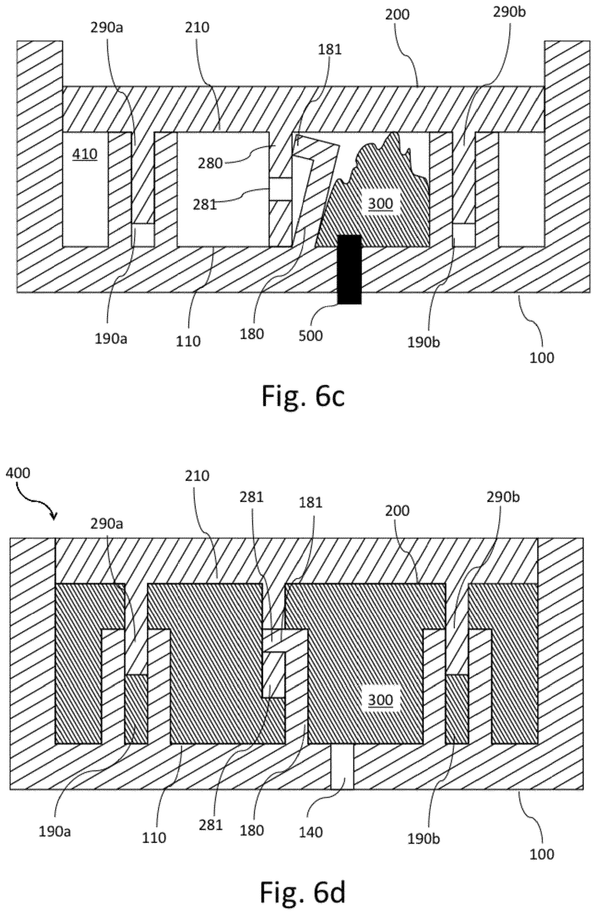

Afterwards, a nozzle 500 is introduced inside the inlet 140 and the material 300 in an unset state is injected inside the internal space 410. The material 300 in an unset state is thus applied to the first supporting surface 110 and is put into contact with the second supporting surface 210, as best shown in **Fig. 6c****.**

During its injection and its expansion, the material 330 in an unset state fills the internal space 410, moves the first 100 and the second 200 elements away from each other and thus puts the two supporting surfaces 110 210 in the first predefined position, as shown in **Fig. 6d****.** In correspondence to this position, the locking protrusion 181 is allowed to engage the locking hole 281 and thus to define a positive fit therewith thereby locking the two supporting surfaces 110 210 in the first predefined position (see e.g. **Fig. 6d**). The material 300 is then allowed to set in an expanded state.

In this embodiment the two locking pins 180, 280 constitute a self-locking mechanism, which automatically and dynamically locks the two supporting surfaces 110, 210 in the first predefined position. The sixth embodiment of the method may e.g. be used to produce covers of glove lockers thereby avoiding the more expensive heat welding processes commonly used in the art.

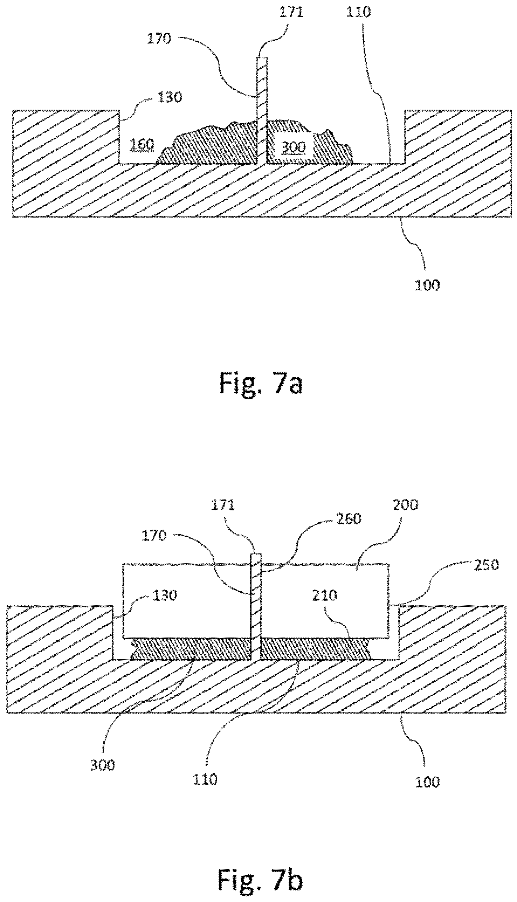

**Figs. 7a** to **7d** show several cross sectional schematic views of the first element 100, of the second element 200, and/or of the product 400 during the performance of a seventh embodiment of the method according to the present invention.

The first 100 and the second 200 elements of this embodiment exhibits the above-described features of the corresponding element of the first embodiment. The first 100 and the second 200 elements further comprise a pin 170 and a generally tubular passage 260, the pin 170 being insertable through the generally tubular passage 260. The pin 170 extends in a direction, which is substantially perpendicular to the first supporting surface 110 and is connected thereto.

As shown in **Fig. 7a****, the** method comprises the step of applying the expandable polymer material 300 in an unset state to the first supporting surface 100. Afterwards, the first portion of the second element 200 is inserted inside the recess 130, so as the pin 170 is inserted through the tubular passage 260 and the second supporting surface 210 is put in contact with the material 300 while in an unset state (cf. **Fig. 7b**). The first portion comprises at least the second supporting surface 210, the second supporting surface 210 facing the first one 110 and being substantially parallel thereto.

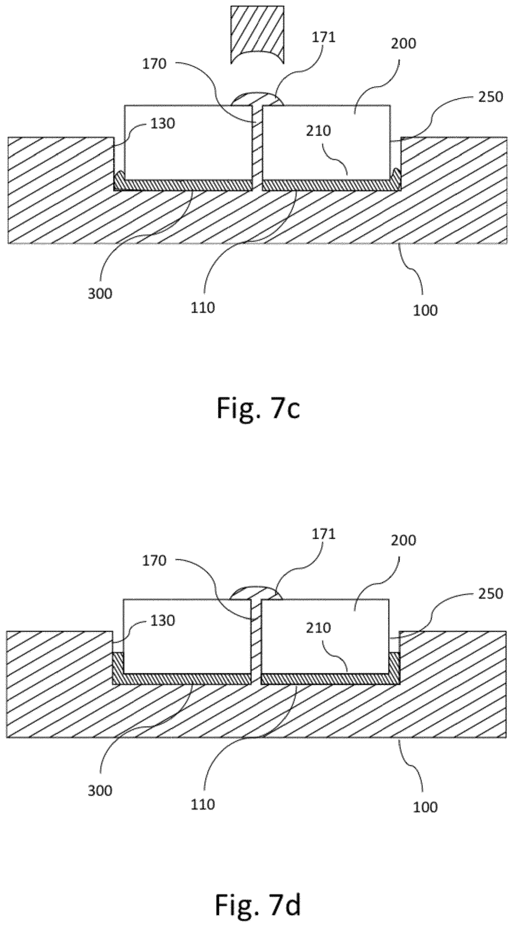

Subsequently, see **Fig. 7c****,** a positive fit between the first 100 and the second 200 elements is established by performing a hot riveting process on a distal end 171 of the pin 170. This way, the two supporting faces are put and locked in the first predefined position.

As shown in **Fig. 7d** once the two supporting surfaces 110, 210 are kept in the first predefined position, the material 300 is allowed to expand along the two supporting surfaces 110, 210, along the lateral surface 130 of the recess 160, and along the lateral surface 250 of the second element 200. After the expansion, the material sets in an expanded state.

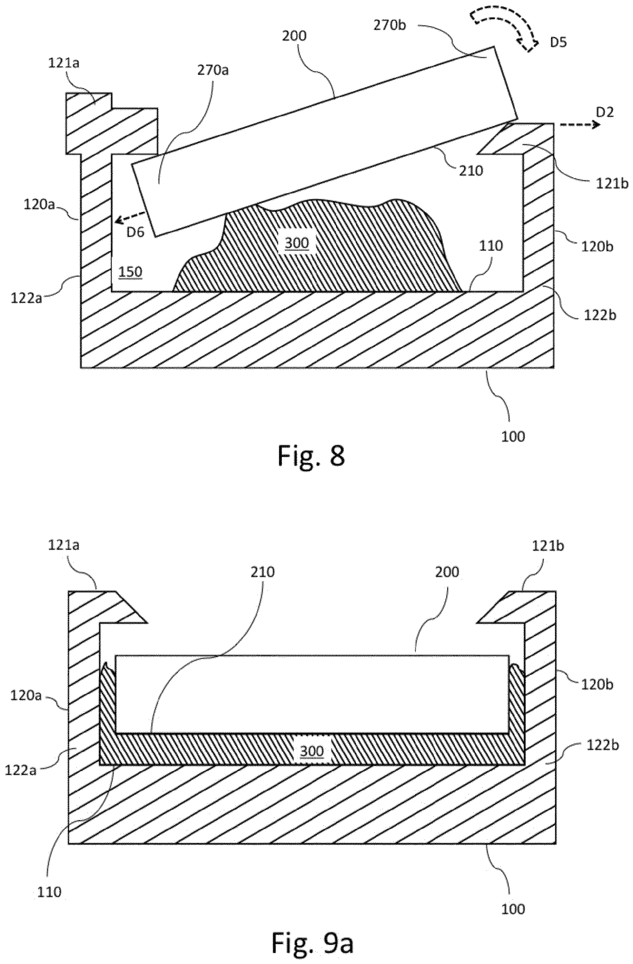

**Fig 8** shows a cross sectional schematic view of the first element 100 and of the second element 200 during the performance of a eighth embodiment of the present invention.

The second element 200 of this embodiment is substantially identical to the corresponding element of the second embodiment, while the first element 100 differs from the corresponding element of the second embodiment by the structural features of the first arm 120a. More specifically, the first arm 120a of the eighth embodiment is rigid and cannot be resiliently moved along any directions. Therefore, the first protrusion 121a constitutes a substantially fixed hold-down device holding down the second element 200.

The eighth embodiment of the method differs from the first embodiment by the mechanism, according to which the second element 200 is inserted inside the interior volume 150. In the case of the eight embodiment, said insertion is achieved by means of a sliding-tilting movement. More specifically, a first side portion 270a of the second element 200 is inserted inside the interior volume 150 and put in contact with the first protrusion 121a. A second side portion 270b of the second element 200, i.e. the side portion opposite to the first side portion 270a, is then tilted along a fifth direction D5 while the first side portion slides along a sixth direction D6 towards the first arm 120a. During this tilting movement, the second side portion 270b come into contact with the second 121b protrusion and moves said protrusion along the second D2 direction, thereby gaining access to the interior volume 150.

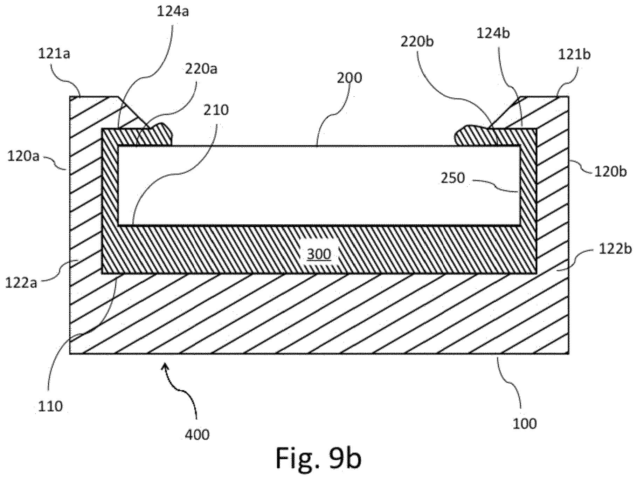

**Figs. 9a** and **Fig. 9b** show a first and a second cross sectional schematic view of the first element 100 and of the second element 200 during the performance of a ninth embodiment of the method according to the present invention, respectively.

The first 100 and the second 200 elements of this embodiment are substantially identical to the corresponding element of the second embodiment. Step a. and step b. of this embodiment are substantially identical to the corresponding steps of the second embodiment of the method, the latter steps being described above (see also **Figs. 2a** to **2c**). Also in the case of the ninth embodiment, step b. is performed after step a. by inserting the second element 200 inside the interior volume 150.

Afterwards, the second supporting surface 210 is pushed by e.g. an urging force towards the first supporting surface 110. This displacement of the second element 200 allows the material 300 to spread along the two supporting surfaces 110, 210, along the two arms 120a, 120b and along the lateral surface 250 of the second element, cf. **Fig. 9a****.**

Subsequently, the material 300 is allowed to push the second element 200 towards the two engaging surfaces 124a, 124b and to spread further along the two engaging surfaces 124a, 124b, until the two supporting surfaces 110, 210 reach the first predefined position shown in **Fig. 9b****.**

In correspondence to the first predefined position, the first 100 and the second 200 elements are not in direct contact with each other since e.g. a relatively consistent part of their external surfaces are separated by at least a layer of expanded material 300, which has set in a clearance between the first and second elements and/or their respective locking elements. In particular, said layer insulates the two elements from vibrations.

Moreover, in correspondence to this predefined position, the first 124a and the second 124b engaging surfaces interact with the third 220a and the fourth 220b engaging surface, respectively. Said interactions is mediated and allowed by the layer of material separating the first 100 and the second 200 elements and locks the two supporting surfaces 110, 210 in the first predefined position. The material then sets in an expanded state.

## Claims

1. Method for manufacturing a product (400) including at least a first (100) and a second (200) element, wherein
the first (100) and the second (200) element are made of a first and a second hard plastic component, respectively, and wherein
the first (100) and the second (200) element comprise a first (110) and a second (210) supporting surface, respectively, the first (110) and the second (210) supporting surface being generally complementary to one another, and wherein
the method comprises at least the steps of:
a) applying an expandable polymer material (300) in an unset state to at least the first supporting surface (110);
b) bringing the expandable polymer material (300) in contact with at least the second supporting surface (210) while the expandable polymer material (300) is in an unset state;
c) putting the first (110) and the second (210) supporting surface in a first predefined position with respect to each other and locking the first (110) and the second (210) supporting surface in the first predefined position;
d) allowing the expandable polymer material (300) to spread at least along the first (110) and/or second (210) supporting surface during expansion thereof;
e) allowing the expandable polymer material (300) to set in an expanded state; and the method is **characterized in that** it comprises the further step of:
f) by exerting a biasing force, putting the first (110) and the second (210) supporting surface in a second predefined position with respect to each other and locking the first (110) and the second (210) supporting surface in a second predefined position.

2. Method according to claim 1, wherein step c) is at least partially performed by using fixing means, such as clamping means.

3. Method according to any one of the preceding claims, wherein step c) is at least partially performed by the weight of the first and/or the weight of the second element.

4. Method according to any one of the preceding claims, wherein during step d) the expandable polymer material (300) is allowed to spread along further surfaces (130, 250) of the first (100) and/or second (200) element, wherein the further surfaces (130, 250) are adjacent to the first (110) and/or the second (210) supporting surface.

5. Method according to any one of the preceding claims, wherein the first (100) and/or the second (200) element comprise first (123a, 123b) and/or second (240a, 240b) locking elements, respectively, and wherein
when the first (110) and the second (210) supporting surfaces are in the first predefined position, the first (123a, 123b) and/or the second (240a, 240b) locking elements engage with engagement portions of the second (200) and/or the first (100) element, respectively, thereby locking the first (110) and second (210) supporting surface in the first predefined position with respect to each other.

6. Method according to claim 5, wherein the first (123a, 123b) and the second (240a, 240b) locking elements constitute a locking pair, the locking pair selected from a group comprising a hook and a portion of the second element, a hook and a portion of the first element, a protrusion and a notch, a tongue and a groove, a pin and a hole, or a rivet and a generally tubular passage, or the like,

7. Method according to claim 1, wherein the first (100) and/or the second (200) element comprise third (124a, 124b) and/or fourth (220a, 220b) locking elements, respectively, and wherein
when the first (110) and the second (210) supporting surfaces are in a predefined position, preferably the second predefined position, the third (124a, 124b) and/or the fourth (220a, 220b) locking elements engage with engagement portions of the second (200) and/or the first (100) element, respectively, thereby locking the first (110) and second (210) supporting surface in the second predefined position with respect to each other,

8. Method according to claim 7 when combined with claims 5 or 6, wherein the first (123a, 123b) and/or the second (240a, 240b) locking elements are the third (124a, 124b) and/or the fourth (220a, 220b) locking elements, respectively.

9. Method according to any one of the preceding claims, wherein the first element comprises a recess (130) with a bottom surface, the bottom surface comprising the first supporting surface (110), and the method further comprises the step of:
g) inserting at least a first portion of the second element (200) into the recess (160), wherein the first portion comprises at least the second supporting surface (210).

10. Method according to claim 9, wherein the recess comprises a lateral surface (130) and wherein the method further comprises the step of:
h) allowing the expandable polymer material (300) to spread along at least a portion of the lateral surface (130) of the recess (160) while the expandable polymer material (300) is in an unset state.

11. Method according to any one of the preceding claims, wherein the first (110) and/or the second (210) supporting surfaces comprise corrugations, preferably complementary in shape.

12. Method according to any one of claims 5 to 11, wherein in step d), the expandable polymer material (300) is allowed to spread into a clearance defined between the first (123a, 123b) and/or the second (240a, 240b) locking elements and the portions of the second (200) and/or the first (100) element, respectively, when the first (110) and second (210) supporting surfaces are in the first predefined position with respect to each other.

## Patentansprüche

1. Verfahren zur Herstellung eines Produkts (400), welches mindestens ein erstes (100) und ein zweites (200) Element aufweist, wobei
das erste (100) und das zweite (200) Element aus einer ersten beziehungsweise einer zweiten harten Kunststoffkomponente hergestellt sind und wobei
das erste (100) und das zweite (200) Element eine erste (110) beziehungsweise eine zweite (210) Stützfläche enthält, wobei die erste (110) und die zweite (210) Stützfläche im Allgemeinen komplementär zueinander sind und wobei
das Verfahren mindestens die folgenden Schritte aufweist:
a) Auftragen eines expandierbareren Polymermaterials (300) in einem entspannten Zustand auf mindestens der ersten Stützfläche (110);
b) In Kontakt bringen des expandierbaren Polymermaterials (300) mit mindestens der zweiten Stützfläche (210) während das expandierbare Polymermaterial (300) in einem entspannten Zustand ist;
c) Bringen der ersten (110) und der zweiten (210) Stützfläche in eine erste vordefinierte Position in Bezug zueinander und Einrasten der ersten (110) und der zweiten (210) Stützfläche in der ersten vorderdefinierten Position;
d) Ermöglichen, dass sich das expandierbare Polymermaterial (300) während seine Expansion, sich mindestens entlang der ersten (110) und/oder der zweiten (210) Stützfläche ausbreitet;
e) Ermöglichen, dass sich das expandierbare Polymermaterial (300) in einem expandierten Zustand verfestigt; und
wobei das Verfahren **dadurch gekennzeichnet ist, dass** es den folgenden zusätzlichen Schritt aufweist:
f) durch Ausüben einer Vorspannkraft die erste (110) und die zweite (210) Stützfläche in eine zweite vordefinierte Position zueinander bringen und Einrasten der ersten (110) und der zweiten (210) Stützflächen in einer zweiten vordefinierten Position.

2. Verfahren nach Anspruch 1, wobei Schritt c) mindestens teilweise durch Fixierungsmittel ausgeübt wird, wie etwa Spannmittel.

3. Verfahren nach einem der vorstehenden Ansprüche, wobei Schritt c) mindestens teilweise durch das Eigengewicht der ersten und/oder das Eigengewicht des zweiten Elements ausgeübt wird.

4. Verfahren nach einem der vorstehenden Ansprüche, wobei sich während dem Schritt d) das expandierbare Polymermaterial (300) entlang weiterer Flächen (130, 250) des ersten (100) und/oder zweiten (200) Elements ausbreiten kann, wobei die weiteren Flächen (130, 250) angrenzend zur ersten (110) und/oder zweiten (210) Stützfläche sind.

5. Verfahren nach einem der vorgehenden Ansprüche, wobei das erste (100) und/oder das zweite (200) Element jeweils ein erstes (123a, 123b) und/oder ein zweites (240a, 240b) Verriegelungselement umfasst und wobei
wenn die erste (110) und die zweite (210) Stützfläche in der ersten vordefinierten Position sind, das erste (123a, 123b) und/oder das zweite (240a,240b) Verriegelungselement mit Eingriffsabschnitten des zweiten (200) und/oder des ersten (100) Elements in Eingriff kommen, wodurch die erste (110) und die zweite (120) Stützfläche in der ersten vordefinierten Position zueinander eingerastet werden.

6. Verfahren nach Anspruch 5, wobei das erste (123a, 123b) und das zweite (240a, 240b) Verriegelungselement ein Verriegelungspaar bilden, wobei das Verriegelungspaar aus einer Gruppe ausgewählt ist, die einen Haken und einen Teil des zweiten Elements, einen Haken und einen Teil des ersten Elements, einen Vorsprung und eine Kerbe, eine Feder und eine Nut, einen Stift und ein Loch, oder eine Niet und einen im Allgemeinen zylindrischen Durchgang, oder dergleichen umfasst.

7. Verfahren nach Anspruch 1, wobei das erste (100) und/oder das zweite (200) Element jeweils ein drittes (124a, 124b) und/oder viertes (220a, 220b) Verriegelungselement umfasst und wobei
wenn die erste (110) und die zweite (210) Stützfläche in einer vordefinierten Position sind, vorzugsweise die zweite vordefinierte Position, das dritte (124a, 124b) und/oder das vierte (220a, 220b) Verriegelungselement jeweils mit Eingriffsabschnitten des zweiten (200) und/oder ersten (100) Elements in Eingriff kommen, wodurch die erste (110) und zweite (210) Stützfläche in der zweiten vordefinierten Position zueinander eingerastet werden.

8. Verfahren nach Anspruch 7, wenn mit Anspruch 5 oder 6 kombiniert, wobei das erste (123a, 123b) und/oder das zweite (240a,240b) Verriegelungselement jeweils das dritte (124a, 124b) und/oder das vierte (220a, 220b) Verriegelungselement sind.

9. Verfahren nach einem der vorstehenden Ansprüche, wobei das erste Element eine Aussparung (130) mit einer Bodenfläche aufweist, wobei die Bodenfläche die erste Stützfläche (110) aufweist, und das Verfahren weiterhin den Schritt aufweist:
g) Einlegen von mindestens eines ersten Abschnitts des zweiten Elements (200) in die Aussparung (160), wobei der erste Abschnitt mindestens die zweite Stützfläche (210) aufweist.

10. Verfahren nach Anspruch 9, wobei die Aussparung eine seitliche Fläche (130) aufweist und wobei das Verfahren weiterhin den Schritt aufweist:
h) Ermöglichen, dass sich das expandierbare Polymermaterial (300) entlang mindestens eines Abschnitts der seitlichen Fläche (130) der Aussparung (160) ausbreitet, während sich das expandierbare Polymermaterial (300) in einem entspannten Zustand befindet.

11. Verfahren nach einem der vorstehenden Ansprüche, wobei die erste (110) und/oder die zweite (210) Stützfläche Sicken enthält, welche vorzugsweise komplementär geformt sind.

12. Verfahren nach einem der Ansprüche 5 bis 11, wobei in Schritt d) sich das expandierbare Polymermaterial (300) in einen Freiraum zwischen dem ersten (123a, 123b) und/oder dem zweiten (240a/240b) Verriegelungselement ausbreiten kann und jeweils den Bereichen des zweiten (200) und/oder des ersten (100) Elements, wenn die erste (110) und die zweite (210) Stützfläche sich in der ersten vordefinierten Position zueinander befinden.

## Revendications

1. Méthode de fabrication d'un produit (400) comprenant au moins un premier (100) et un second élément (200), dans laquelle
le premier (100) et le second élément (200) sont constitués respectivement d'un premier et d'un second composant en plastique dur, et dans laquelle
le premier (100) et le second élément (200) comprennent respectivement une première (110) et une seconde surface de support (210), la première (110) et la seconde surface de support (210) étant généralement complémentaires l'une de l'autre, et dans laquelle
la méthode comprend au moins les étapes :
a) d'application d'un matériau polymère expansible (300) dans un état non défini sur au moins la première surface de support (110) ;
b) de mise du matériau polymère expansible (300) en contact avec au moins la seconde surface de support (210) alors que le matériau polymère expansible (300) est dans un état non fixé ;
c) de placement de la première (110) et de la seconde surface de support (210) dans une première position prédéfinie l'une par rapport à l'autre et de blocage de la première (110) et de la seconde surface de support (210) dans la première position prédéfinie;
d) d'autorisation au matériau polymère expansible (300) à s'étendre au moins le long de la première (110) et/ou de la seconde surface de support (210) pendant l'expansion de celui-ci ;
e) d'autorisation au matériau polymère expansible (300) à se fixer dans un état expansé;
et la méthode est **caractérisée en ce qu'**elle comprend l'étape supplémentaire :
f) de placement de la première (110) et de la seconde surface de support (210), en exerçant une force de biais, dans une première position prédéfinie l'une par rapport à l'autre et de blocage de la première (110) et de la seconde surface de support (210) dans une seconde position prédéfinie.

2. Méthode selon la revendication 1, dans laquelle l'étape c) est au moins partiellement réalisée en utilisant des moyens de fixation, tels que des moyens de serrage.

3. Méthode selon une quelconque des revendications précédentes, dans laquelle l'étape c) est au moins partiellement réalisée par le poids du premier et/ou le poids du second élément.

4. Méthode selon une quelconque des revendications précédentes, dans laquelle, pendant l'étape d), le matériau polymère expansible (300) est autorisé à s'étaler le long d'autres surfaces (130, 250) du premier (100) et/ou du second élément (200), dans laquelle les autres surfaces (130, 250) sont adjacentes à la première (110) et/ou à la seconde surface de support (210).

5. Méthode selon une quelconque des revendications précédentes, dans laquelle le premier (100) et/ou le second élément (200) comprennent respectivement des premiers (123a, 123b) et/ou des seconds éléments de blocage (240a, 240b), et dans laquelle
lorsque la première (110) et la seconde surfaces de support (210) sont dans la première position prédéfinie, les premiers (123a, 123b) et/ou les seconds éléments de blocage (240a, 240b) s'engrènent respectivement avec des parties d'engrenage du second (200) et/ou du premier élément (100), bloquant ici la première (110) et la seconde surfaces de support (210) l'une par rapport à l'autre dans la première position prédéfinie.

6. Méthode selon la revendication 5, dans laquelle les premiers (123a, 123b) et les seconds éléments de blocage (240a, 240b) constituent une paire de blocage, la paire de blocage étant sélectionnée dans un groupe comprenant un crochet et une partie du second élément, un crochet et une partie du premier élément, une saillie et une encoche, une languette et une rainure, une broche et un trou, ou un rivet et un passage généralement tubulaire, ou similaire.

7. Méthode selon la revendication 1, dans laquelle le premier (100) et/ou le second élément (200) comprennent respectivement des troisièmes (124a, 124b) et/ou quatrièmes éléments de blocage (220a, 220b), et dans laquelle
lorsque la première (110) et la seconde surfaces de support (210) sont dans une position prédéfinie, de préférence la seconde position prédéfinie, les troisièmes (124a, 124b) et/ou les quatrièmes éléments de blocage (220a, 240b) s'engrènent respectivement avec des parties d'engrenage du second (200) et/ou du premier élément (100), bloquant ici la première (110) et la seconde surfaces de support (210) l'une par rapport à l'autre dans la seconde position prédéfinie.

8. Méthode selon la revendication 7 lorsqu'elle est combinée avec les revendications 5 ou 6, dans laquelle les premiers (123a, 123b) et/ou les seconds éléments de blocage (240a, 240b) sont respectivement les troisièmes (124a, 124b) et/ou les quatrièmes éléments de blocage (220a, 220b).

9. Méthode selon une quelconque des revendications précédentes, dans laquelle le premier élément comprend un renfoncement (130) avec une surface de fond, la surface de fond comprenant la première surface de support (110), et la méthode comprend par ailleurs l'étape :
g) d'insertion d'au moins une première partie du deuxième élément (200) dans le renfoncement (160), dans laquelle la première partie comprend au moins la seconde surface de support (210).

10. Méthode selon la revendication 9, dans laquelle le renfoncement comprend une surface latérale (130) et dans laquelle la méthode comprend en outre l'étape :
h) d'autorisation au matériau polymère expansible (300) à s'étendre le long d'au moins une partie de la surface latérale (130) du renfoncement (160) tandis que le matériau polymère expansible (300) est dans un état non fixé.

11. Méthode selon une quelconque des revendications précédentes, dans lequel la première (110) et/ou la seconde surfaces de support (210) comprennent des ondulations, de préférence de formes complémentaires.

12. Méthode selon l'une quelconque des revendications 5 à 11, dans laquelle, à l'étape d), le matériau polymère expansible (300) est autorisé à s'étendre dans un espace défini respectivement entre les premiers (123a, 123b) et/ou les seconds éléments de blocage (240a, 240b) et les parties du second (200) et/ou du premier élément (100), lorsque la première (110) et la seconde surface (210) de support sont dans la première position prédéfinie l'une par rapport à l'autre.
